Europäisches Patentamt

European Patent Office

Office européen des brevets

(11) Publication number: **0 327 783**
**A1**

(12) **EUROPEAN PATENT APPLICATION**

(21) Application number: 88630023.5

(51) Int. Cl.⁴: **C03C 14/00**

(22) Date of filing: 08.02.88

(43) Date of publication of application:
16.08.89 Bulletin 89/33

(84) Designated Contracting States:
DE FR GB

(71) Applicant: **UNITED TECHNOLOGIES CORPORATION**
**United Technologies Building 1, Financial Plaza**
**Hartford, CT 06101(US)**

(72) Inventor: **Galasso, Frank S.**
**13 Green Manor Road**
**Manchester Connecticut 06040(US)**
Inventor: **Scola, Daniel A.**
**83 Stonepost Road**
**Glastonbury Connecticut 06033(US)**
Inventor: **Veltri, Richard D.**
**16 Butternut Drive**
**East Hartford Connecticut 06118(US)**

(74) Representative: **Schmitz, Jean-Marie et al**
**OFFICE DENNEMEYER S.à.r.l. P.O. Box 1502**
**L-1015 Luxembourg(LU)**

(54) Process for manufacturing glass-ceramic composites of high refractoriness.

(57) A process for the formation of glass ceramic composites wherein the composite matrix substantially forms a single crystalline phase is disclosed. The process comprises the following steps: hydrolization of a solution containing organometallics to form a gellation precipitate which contains a condensation polymer, drying the precipitate to form a powder, combining the powder with high temperature stable fibers, hot pressing to vitrify or densify the powder, heat treating to form a glass ceramic composite.

EP 0 327 783 A1

**Process for Manufacturing Glass-Ceramic Composites of High Refractoriness**

Technical Field of the Invention

The invention relates to the molding, and more specifically to the manufacture of glass-ceramic composites.

Background Art

Many ceramic, glass, and glass-ceramic compositions well known to the art exhibit chemical and structural stability at high temperatures. This desirable characteristic has initiated the use of such materials in the fabrication of articles to be used in high temperature applications, such as jet engine components.

The high temperature stability of such materials has initiated the development of high temperature composites wherein a glass, ceramic or glass-ceramic material is used as a matrix, within which is embedded reinforcing high temperature stable fibers. The fibers act to distribute stress through the matrix material, while the matrix preserves the high temperature stability of the composite. These qualities have allowed for the substitution of a composite material for a more costly high temperature stable structural metal in product designs calling for high temperature stable components.

Typically, glass-ceramic composites are formed in a five step process; first, melting a glass forming batch of component materials of desired composition, followed by cooling of the glass; second, dividing the glass into fine particles, or "frits" for use as a matrix precursor; third, layering the glass particles with a suitable high temperature stable fiber in a die of a desired shape; fourth, hot pressing the glass particles and fibers to vitrify the particles and form a glass-fiber composite; fifth, heat treating the composite to crystallize the matrix material.

The outlined process has proven to be satisfactory in the formation of glass-ceramic composites, but there remains a desire to find alternative methods which may be used in the formation of such materials. It is this desire to which the present invention is addressed.

It is an object of the invention to provide a new method for the production of glass-ceramic composites whose compositions are thermodynamically stable.

Another object of the invention is to provide a new method of producing glass-ceramic composites of high refractoriness.

Disclosure of the Invention

The present invention discloses a process of making glass-ceramic composites of high refractoriness, wherein the matrix substantially forms a single crystalline phase.

According to the invention, composites are formed by a "sol-gel" process wherein a solution of materials which includes dissolved organometallics is hydrolyzed to gellation to form a polymer gel, wherein a precipitate containing a condensation polymer is formed. The precipitate is filtered and dried to form a powder. The powder is combined with high temperature stable inorganic fibers, and subsequently is hot pressed and heat treated to form a glass-ceramic composite, wherein the matrix predominantly forms a single crystalline phase.

Other features and advantages of the invention will become apparent from the following description.

Best Mode for Carrying Out the Invention

Organometallics suitable to form a condensation polymer upon hydrolysis in an aqueous organic solution may be used to practice the invention.

The preferred organometallics have the formula: $M(OR)_n$, where M is Li, Si, Al, Mg, Ba, As, Nb, Ta, Sb, B, Ca, Zn, Zr, Fe, Nd, Na, K, Sr, Ti; R is an aryl or alkyl group and n is a numerical value of 1 to 8, which is determined by the coordination number of M. The alkyl group may be methyl, ethyl, propyl, butyl, phenyl or any isomer thereof, or may be any long chain alkyl or substituted phenyl radical, such as p-methylphenyl radical. The radical groups attached to M control the solubility and rate of hydrolysis and polymerization, and this in turn controls the molecular weight of the gel formed. The preferred organometallics also include

2

acetates, acetoacetonates, and 2,4-pentanedionates, which include a metal of the group described above. Especially preferred organometallics include tetraethylorthosilicate (ethylsilicate), aluminum tri-isopropoxide, aluminum tri-sec-butoxide, and aluminum, tri-tert-butoxide, aluminum triethoxide, tetraethylorthotitanate, and barium acetate. These materials are available from Aldrich Chemical, Milwaukee, Wisconsin. They may be used singly or in combination with other organometallics for inclusion in the process.

Metal salts or metal oxides necessary to form a particular glass ceramic matrix may be incorporated into the invention. The preferred salts may be represented as MX where M is Li, As, Mg, Ca, Si, Al, Mg, Ba, Nb, Ta, Ca, Zn, Zr, Fe, Nd, Na, K, Sr, Ti; and X comprises a nitrate, sulfate, carbonate, oxide, or hydroxide. Especially preferred salts or oxides include $LiNO_3$, $Mg(NO_3)_2$, $Zr(NO_3)$, $Ba(NO_3)_2$, $As_2O_3$, BaO, MgO. The salts may be used singly or in combination with other salts to form a particular glass-ceramic matrix.

Solvents used in the process may be any aqueous organic solution within which the components necessary to form the glass-matrix; i.e. the organometallics and metal salts (if any,) may be dissolved and hydrolyzed. The preferred aqueous organics include aqueous alcohol solutions, with the most preferred being, secondary butyl alcohol-water, ethanol-water, isobutyl alcohol-water, and isopropyl alcohol-water solutions.

Fibers used in process may be any high temperature stable fiber suitable to be used in the final product application. Preferred high temperature stable fibers include silicon carbide (SiC), Carbon (C), Graphite (C), FPTM-Alumina ($Al_2O_3$) and NEXTEL® fiber.

Silicon carbon fibers (SiC) may be obtained in a yarn or cloth form from Sumitomo Co., Japan, carbon fibers (C) may be obtained in yarn or cloth form from Union Carbide Co., Danbury, CT, FP-alumina fibers ($Al_2O_3$) may be obtained in yarn form from the E. I. DuPont de Nemours Co., Inc., Wilmington, DE and NEXTEL may be obtained from 3M Corporation, St. Paul, MN in yarn or cloth form.

The selection of component materials for use in the process depends upon the final matrix having the desired predominant single crystalline phase to be formed. Each matrix is formed from a glass, and each type of glass is formed from a glass-forming batch of component materials in specific proportions well known to the art. Once these proportions are determined, the selection of the organometallics, salts and solvents may begin.

The organometallics are selected to form a condensation polymer product upon hydrolysis in an aqueous organic solution. In addition, the organometallics are also selected to form a polymer product having present within it the component materials in the specific proportions necessary to form the desired glass, and ultimately to form a predominant single crystalline phase. Preferably, these phases include barium osumilite, beta-spodumene, mullite and silicon carbon. This may require the use of a single, or a mixture, of organometallics to be used in the process.

The metal salts are selected upon the basis of glass composition. The desired glass may require a specific proportion of a metal salt or salts, as a necessary component material. The salt, or salts, selected for inclusion as components in the process should be selected to be in the proportion necessary to form the desired glass, and ultimately to form a predominant single crystalline phase.

The solvent should be selected on the basis of solubility and on the processability of the powder formed. Preferably, the solvent is a light alcohol which is water soluble which exhibits a relatively low boiling point which acts to facilitate the subsequent evaporation of the solvent. The amount of solvent used in the first step of the invention affects the length of the polymer chains formed, and the use of higher volumes of the solvent in the hydrolysis will act to decrease the number - average molecular weight of the condensation polymer formed. It has been observed that powders formed having lower number - average molecular weights vitrify at a lower temperature in the hot pressing step. It should be noted that the molecular composition remains constant although different solvent volumes may be used.

The invention typically comprises five steps. A first step is the formation of a polymer gel from a solution of materials which include polymerizable organometallics in an aqueous organic solution. The organometallics in the solution are hydrolyzed in the presence of water, and the polymerization proceeds to yield a polymer gel. This polymer gel includes a condensation polymer of sufficient molecular weight which is insoluble in the solution, therefore it precipitates. Additionally, metal salts necessary to form a particular matrix may also undergo hydrolysis to become an integral part of the condensation polymer, and are included in the polymer gel. Once the polymerization has proceeded to a desired product yield, the precipitate is filtered to remove any unreacted organometallics, salts and aqueous organic solvent.

A second step in the process comprises the drying of the polymer gel. The polymer gel is filtered and then dried to remove remaining aqueous organic, and to form the polymer gel into a fine powder.

A third step in the process comprises combining the powder with high temperature stable inorganic fibers. The size and orientation of the fibers is wholly inconsequential to the practice of the invention.

A fourth step in the process is hot pressing the powder and fiber combination to accomplish vitrification

3

of the powder to form a matrix. The time and temperature parameters are particular to the composition of the powder formed, which is further exemplified in the examples cited below, but in any case requires that the powder and fibers be compressed and heated for a sufficient time at a sufficient temperature to vitrify or densify the powder, and to form a combination of the materials.

A fifth step in the process is the formation of crystals in situ. This requires that the combination be subjected to a heat treatment of sufficient duration to assure that the growth of crystals within the matrix exceeds 50 volume percent "predominant, crystalline phase" of the matrix.

It is again emphasized that in the practice of the invention, particular attention must be paid to the weight ratios of the components used for the formation of the polymer gel. This must be done to insure that the resulting powder contains the proper constituents in the necessary stoichiometric ratio to form the desired matrix in the subsequent vitrification and heat treating process steps.

## EXAMPLE 1

In one embodiment of the invention a silica matrix was the desired matrix material. Tetraethylorthosilicate $(Si(OC_2H_5)_4)$ was chosen to form the polymer gel, as it is known in the art that upon hydrolysis a silicon oxide polymer is formed by condensation polymerization. Tetraethylorthosilicate is commercially available in liquid form from Aldrich Chemical Co.. For the first step of the invention, 50.00 grams of tetraethylorthosilicate liquid was dissolved in 50.00 grams of absolute ethanol to form a first solution. A second solution was formed by mixing 144.85 grams of absolute ethanol with 34.601 grams of distilled water. Then, the second solution was added to the first at room temperature and the solution was subsequently refluxed for 72 hours to form an insoluble polymer gel. The polymer gel was filtered to remove any excess solvent containing unreacted tetraethylorthosilicate in solution, and dried at 120°C for 16 hours to yield 16.50 grams of white solid. Differential scanning calorimetry (DSC) of this solid showed endotherms at 125°C (water evolution), at 325°C and at 325°C, and also noted were exotherm reaction peaks at 400°C, and at 475°C.

The filtrate was concentrated in a rotary evaporator for 2 hours at 50°C to yield an additional 0.4 grams of white powder. Subsequently, the polymer gel powder was layered between SiC yarns in a carbon die. In the fourth step, the sample was pressed at 1000 psi for 15 minutes at 1550°C, which acted to vitrify the powder, and to accomplish the fifth step, crystallization of at least 50 volume percent of the matrix.

Table A shows several examples of the formation of the product, here silicon oxide polymer formed using different weight ratios of water to solvent for the same weight of starting material, and the weight percent yield of the polymer, illustrating the efficiency of the reaction to form high yield of the derived polymer product which has various moleculr weights. This weight percent yield was derived by dividing the weight of the actual mass of hydrated hydroxyl or oxide gel formed by the theoretical weight of oxide mass that could be formed utilizing the starting materials. It should be noted that yields in excess of 100% are obtained because some alkyl, aryl and hydroxyl are still attached to the metal oxide backbone during hydrolysis but these are subsequently driven off in the drying and hot pressing steps.

## TABLE A

| Yields of Silica (Silicon Dioxide) Glass Parameters | | | |
|---|---|---|---|
| Sample No. | Solvent Grams $H_2O$/Grams Absolute Ethanol | WT% Yield After 120°C Treatment | WT% Yield After 600°C Treatment |
| SG-8 (Ex. 1) | 34.60/144.85 | 115 | 100 |
| SG-1 | 4.3/175.15 | 25 | 22.4 |
| SG-2 | 8.6/170.90 | 106 | 92 |
| SG-15 | 64.80/114.65 | 109 | 100 |
| SG-1A | 4.3/175.15 (plus 5 ml of concentrated $NH_4OH$) | 28 | 22.4 |
| SG-2A | 8.6/170.90 (plus 5 ml of concentrated $NH_4OH$) | 76 | 55 |
| SG-4 | 8.6/350.30 | 25 | 21 |
| SG-10 | 17.2/750.60 | 112 | 100 |
| SG-20 | 43/1751.50 | 108 | 97 |

## EXAMPLE 2

In a second embodiment of the invention, mullite was the desired matrix material. Two organometallics were selected for use in the first step, aluminum tri-sec-butoxide ($Al(OC_4H_9)_3$) and tetraethylorthosilicate ($Si-(OC_2H_5)_4$). It is known that upon hydrolysis these react to form an alumina-silicate poymer by condensation polymerization. The aluminum tri-sec-butoxide is commercially available as a liquid from Aldrich Chemical Co., or may be synthesized in the laboratory. For the first step in the invention, 50 grams of the aluminum tri-sec-butoxide and 12.9 grams of tetraethylorthosilicate were dissolved in 50 grams of isopropanol to form a first solution. A second mixture of 160.6 grams of isopropanol and 7.71 grams of distilled water was prepared and added to the solution of alkoxides in isopropanol to start the hydrolysis. The solution was refluxed for several hours until no further precipitation occurred. The mixture was concentrated to remove at least 80% of the liquid at room temperature, and the remaining mixture was dried at 120°C for 18 hours to yield 19.9 grams of white solid. The powder was then layered between SiC yarns in a carbon die having a desired shape. In the fourth step, the materials were pressed at 2000 psi at 1700°C, for 10 minutes to densify the powder, and as per the fifth process step, to crystallize at least 50 volume percent of the matrix.

Similarly, as in Example 1, Table B illustrates several examples of the process with different weight ratios of water to alcohol for the same weight of starting materials used to form the product, here alumina-silicate polymer, and weight percentage yields of the polymers formed by condensation polymerization via the hydrolysis.

TABLE B

| Yield of Mullite (Alulmina - Silica) Polymers | | |
|---|---|---|
| Sample No. | Solvent Grams $H_2O$/Grams Isopropanol | WT% Yield After 120°C Treatment |
| SG-22 (Example 2) | 7.71/160.6 | 141 |
| SG-25 | 23.1437/145.6 | 139 |
| SG-28 | 46.2716/122.03 | 139 |

## EXAMPLE 3

A Lithium aluminosilicate matrix with a beta-spodumene crystal phase as the predominant crystalline phase was the desired product. It is well known in the art that this matrix may be produced from a range of compositions of component materials, with the preferred ranges and compositions noted on Table I.

TABLE I

| Beta Spodumene | |
|---|---|
| Component | WT % On An Oxide Basis |
| $Li_2O$ | 7.5 - 5 |
| $Al_2O_3$ | 15 - 25 |
| $As_2O_3$ | 0.5 - 3 |
| $SiO_2$ | 60 - 75 |
| $ZrO_2$ | 1 - 3 |
| $Nb_2O_5$ | 0 - 10 |
| $Ta_2O_5$ | 0 - 10 |
| $Nb_2O_5 + Ta_2O_5$ | 1 - 10 |
| MgO | 0 -10 |
| ZnO | 0 - 3 |
| BaO | 0 - 3 |
| $Fe_2O_3$ | 0 - 3 |
| $Nd_2O_3$ | 0 - 3 |
| $Na_2O$ | 0 - 3 |
| $K_2O$ | 0 - 3 |
| CaO | 0 - 3 |
| SrO | 0 - 3 |
| $ZnO + BaO + Fe_2O_3 + Nd_2O_3 + Na_2O + K_2O + CaO + SrO$ | 0 - 10 |

In the first step, 29.553 grams of aluminimum tri-sec-butyl alcohol ($Al(OC_4H_{10})_3$) and 62.406 grams of tetraethylorthosilicate ($Si(OC_2H_5)_4$) were dissolved in 73 grams of secondary butyl alcohol to form a first solution. A second solution of 210.6 grams of distilled water, and 146.2 grams of isopropanol was made, to which was added 4.136 grams of Lithium nitrate ($LiNO_3$), 3 grams of magnesium nitrate ($Mg(NO_3)_2$) and 0.9 grams of zirconium nitrate ($Zr(NO_3)_4$) to form a second solution. This second solution was then added to the first solution, and it was observed that a polymer formed almost immediately. The resulting mixture was heated to $50°C$ for 24 hours, and then refluxed for 20 hours until no further polymer gel precipitated. The solvent was removed from the product, which had a weight of 33.2 grams by filtering, and the filtrate was concentrated in a rotary evaporator at $50°C$ to obtain an additional amount of product, 1.0 grams. The powders was combined and then dried in vacuum at $120°C$ for 4 hours to yield a final white solid product of 34.2 grams. The powder formed in this process had a composition with the following oxide composition based on weight percent in the final product: $6SiO_2 + 1.2 Al_2O_3 + 0.6 Li_2O + 0.4 MgO(2 wt\% ZrO_2)$.

Next, the powder was layered among SiC fibers which were laid parallel to each other to form fiber layers. The fiber layers were oriented so that the fibers in successive layers were perpendicular in direction, forming a $0°/90°$ configuration of the fibers. Such a selective orientation of fibers allows for the final form to have improved strength characteristics to forces applied in the direction of the oriented fibers.

Subsequently, the powder and fiber was pressed at 1000 psi for 15 minutes at $1350°C$, and then heat treated at $1050°C$ for 2 hours to crystalize the matrix. Similarly, as in Example 1, Table C illustrates several examples of the process with different weight ratios of water to alcohol for the same weight of starting materials used to form the product, here a lithium-aluminosilicate polymer, and weight percentage yields of the polymers.

It was observed that the sample formed a single crystalline phase, beta-spodumene. Although not well understood, it has been noted that the SiC yarn in similar compositions produced from frits in conventional processes yield multiphase matrices. It is postulated that the more reactive powders formed in the disclosed process tend to kinetically favor more rapid formation of the stable phase matrix.

TABLE C

| Yield of Aluminosilicate | | | |
|---|---|---|---|
| Sample No. | Solvent Grams H₂O/Grams Isopropanol | WT% Yield After 120°C Treatment | WT% Yield After 600°C Treatment |
| SG-62 (Ex. 3) | 210.6/146.19 | 129 | 97 |
| SG-62A | 393.12/272.88 | 134 | 98 |
| SG-62B | 4009.82/2783.46 | 140 | 98 |

EXAMPLE 4

A matrix material with barium osumilite as the predominant crystal phase is the desired product. It is well known in the art that this matrix can be produced from a range of compositions of component materials with the preferred ranges and compositions noted on Table II.

TABLE II

| Ba Osumilite | |
|---|---|
| Component | WT % On An Oxide Basis |
| $SiO_2$ | 49.7 - 62.3 |
| $Al_2O_3$ | 20.2 - 28.1 |
| $MgO$ | 7.4 - 10 |
| $BaO$ | 7.2 - 14.1 |
| $As_2O_3$ | 0 - 9 |
| $Nb_2O_5$ | 0 - 3 |
| $Ta_2O_5$ | 0 - 5 |
| $Si$ | 0 - 0.4 |
| $CaO$ | 0 - 2.6 |
| $ZuO$ | 0 - 9.3 |
| $ZrO_2$ | 0 - 5 |
| $TiO_2$ | 0 - 12 |

In the first step a first solution was made using 86.15 grams of ethyl silicate and 86.15 grams of isopropanol. A second solution was made using 652.3 grams of isopropanol and 22.4 grams of water. The second solution was then added to the first solution. A third solution was made of 67.8 grams of aluminum tri-sec-butyl alcohol 7.92 grams of magnesium nitrate, 9.17 grams of barium nitrate and 0.35 grams of arsenic oxide, all of which were added to 67.9 grams of isopropanol to form a third solution. The third solution was then added to the combination of the first and second solution to form a reaction mixture. A polymer gel was observed to form immediately upon the curing of the solutions at room temperature. The reaction mixture was heated at 50°C for 24 hours, and subsequently refluxed for an additional 24 hours and then the reaction mixture was cooled to room temperature. The mixture was filtered to separate the powder formed, and the filtrate was concentrated in a rotary evaporator to yield an additional quantity of product. The white powder was further dried at 120°C for 6 hours to obtain a final product yield of 56 grams of powder. This resultant powder had the following oxide composition based on weight percent: 49.8 $Al_2O_3$ + 28.1 $SiO_2$ + 7.4 $MgO$ + 14.1 $BaO$ + 0.7 $As_2O_3$ based on weight percent.

In the third step the powder was layered among silicon carbide fibers and according to the fourth step this combination was hot pressed at 1425°C for a few minutes to vitrify the powder. Subsequently, according to the fifth step the vitrified powder and fibers were heat treated for 60 hours at 120°C to crystallize the matrix.

It was observed using X-ray diffraction that the sample formed showed predominantly a single crystalline phase in the matrix, namely, barium osumilite. It is again postulated that the more reactive powders formed in the disclosed process tend to kinetically favor more rapid formation of the stable phase matrix.

Similarly, as in Example 1, Table D illustrates several examples of the process using different weight ratios of water to solvent for the same weight of starting material used to form the product, here a polymer used to form barium osumilite, and weight percentage yields of the polymers.

### TABLE D

| Yield of Barium Osumilite | | |
|---|---|---|
| Sample No. | Solvent Grams $H_2O$/Grams Isopropanol | WT% Yield After $120^{\circ}$ C Treatment |
| SG-33 (Ex. 4) | 22.4/86.15 | 112 |
| SG-34 | 44.89/172.65 | 114 |
| SG-35 | 875.8/3368.31 | 116 |

From the foregoing experiments it can readily be seen that the formation of glass-ceramic composite materials with a matrix which substantially forms a single crystal phase is possible by the disclosed process. Such a structure is suitable for applications wherein high temperature strength and toughness are required. Applications include gas turbine engines and environment, and high temperature structural ceramic components.

It should also be obvious to one skilled in the art that the fifth step of the disclosed process, namely the heat treating of the composition to form a glass-ceramic composite may be omitted if only a glass-fiber composite is desired.

Furthermore, it is to be understood that other compositions may be used to form other glass matrix composite materials using the inventive process without detracting from the scope or spirit of the invention.

### Claims

1. A method of making a glass-ceramic composite comprising the steps:
A) forming a polymer gel by hydrolyzing a composition containing at least one organometallic to form a precipitate which includes a condensation polymer;
1) the organometallic having the formula $M(OR)_n$ where R is an alkyl or aryl group; M is Li, Si, Al, Mg, Ba, As, Nb, Ta, Ca, Zn, Sb, B, Zr, Fe, Nd, Na, K, Sr, or Ti, and n is a numerical value of 1 to 8, which is determined by the coordination number of M;
B) drying the polymer gel to form a powder;
C) combining the powder with high temperature stable inorganic fibers;
D) hot pressing the powder and fiber combination;
E) heat treating the hot pressed combination to form a glass-ceramic composite;
wherein the matrix predominantly forms a single crystalline phase.

2. The method of claim 1 wherein the composition additionally contains at least one metal salt;
the metal salt being represented by the formula MX where M is Li, As, Mg, Ca, Si, Al, Mg, Ba, Nb, Ta, Zn, Zr, Fe, Nd, Na, K, Sr, or Ti; and
X is a nitrate, sulfate, carbonate, oxide, or hydroxide.

3. The method of claim 1 wherein the composition additionally contains at least one metal oxide;
the metal oxide being represented by the formula MX where M is Li, As, Mg, Ca, Si, Al, Mg, Ba, Nb, Ta, Zn, Zr, Fe, Nd, Na, K, Sr, or Ti; and
X is a nitrate, sulfate, carbonate, oxide or hydroxide.

4. The method of claim 1 wherein the single crystalline phase is barium osumilite.

5. The method of claim 1 wherein the single crystalline phase is beta-spodumene.

6. The method of claim 1 wherein the single crystalline phase is mullite.

7. The method of claim 1 wherein the high temperature stable inorganic fibers are silicon carbide.

8. An article produced by the method of claim 1.

9. An article produced by the method of claim 2.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CERAMIC ENGINEERING & SCIENCES PROCEEDINGS, vol. 7, nos. 7-8, July-August 1986, Columbus, Ohio, US; V.J. POWERS et al.: "SiC fiber-reinforced glass-ceramic composites in the zirconia/magnesium aluminosilicate system" * Whole article * | 1 | C 03 C 14/00 |
| A | EP-A-0 114 101 (CORNING GLASS WORKS) * Claim 1 * | 1,4 | |
| | | | TECHNICAL FIELDS SEARCHED (Int. Cl.4) |
| | | | C 03 C |

The present search report has been drawn up for all claims

| Place of search | Date of completion of the search | Examiner |
|---|---|---|
| THE HAGUE | 10-08-1988 | BOUTRUCHE J.P.E. |

EPO FORM 1503 03.82 (P0401)